# EUROPEAN PATENT APPLICATION

(11) **EP 4 424 516 A1**
(43) Date of publication of application: **04.09.2024**
(21) Application number: 22886642.2
(22) Date of filing: 06.10.2022
(51) Int. Cl.: B41M 5/00, B41J 2/01, C09D 11/00, C09D 11/30, C09D 11/322

(54) **IMAGE RECORDING METHOD AND INK SET FOR IMPERMEABLE SUBSTRATE**

(30) Priority: 29.10.2021 JP 2021177666
(71) Applicant: FUJIFILM Corporation, Tokyo 106-8620 (JP)
(72) Inventor: MAKUTA, Toshiyuki, Ashigarakami-gun, Kanagawa 258-8577 (JP)
(74) Representative: HGF
(86) International application number: PCT/JP2022/037507
(87) International publication number: WO 2023/074311

(57) **Abstract**

An image recording method including a step of applying an ink for forming an alkali-peelable layer onto an impermeable substrate, a step of applying an ink jet ink for electron beam curing, containing a pigment and polymerizable monomers, onto the ink for forming an alkali-peelable layer applied onto the impermeable substrate, and a step of irradiating the ink jet ink for electron beam curing applied onto the impermeable substrate with electron beams.

## Description

### BACKGROUND OF THE INVENTION

### 1. Field of the Invention

The present disclosure relates to an image recording method and an ink set for an impermeable substrate.

### 2. Description of the Related Art

An image recording method in which an ink is applied onto a substrate and the applied ink is irradiated with active energy rays such as ultraviolet rays to cure the ink, thereby obtaining an image is known as a kind of image recording method.

In recent years, it has been studied to replace ultraviolet rays as active energy rays to be used for the irradiation with electron beams.

For example, JP2018-86726A discloses a method for forming a cured film, which enables a cured film having excellent adhesiveness to a substrate and having a small amount of residual monomers to be obtained, the method including a composition applying step of applying a curable composition including polymerizable monomers onto a recording medium, and an irradiation step of irradiating the curable composition with two or more kinds of active energy rays, in which at least electron beams with an acceleration voltage of 130 kV or less are used as the active energy rays in the irradiation step, and the electron beams are irradiated at an absorption amount of 20 to 75 kGy in the irradiation step.

### SUMMARY OF THE INVENTION

In a case where an image is recorded on an impermeable substrate (for example, a beverage container made of a resin and a food packaging material made of a resin), an adhesiveness between the recorded image and the impermeable substrate is required in some cases.

On the other hand, from the viewpoint of environmental considerations, it is also considered to recycle an image recorded matter in which an image is recorded on an impermeable substrate. For the purpose of recycling, it has been studied that the image recorded matter is immersed in an aqueous alkali solution and an image is peeled from the impermeable substrate. Image peelability (hereinafter also referred to as alkali peelability) in the case is required in some cases.

With regard to the requirements, in a case where an attempt is made to improve the adhesiveness of the image, the alkali peelability may be deteriorated, and in a case where an attempt is made to improve the alkali peelability of the image, the adhesiveness is reduced in some cases.

An object of one aspect of the present disclosure is to provide an image recording method that enables recording of an image having excellent adhesiveness to an impermeable substrate and excellent alkali peelability, and an ink set for an impermeable substrate suitable for the image recording method.

The present disclosure includes the following aspects.
<1> An image recording method including:
   a step of applying an ink for forming an alkali-peelable layer onto an impermeable substrate;
   a step of applying an inkjet ink for electron beam curing, containing a pigment and polymerizable monomers, onto the ink for forming an alkali-peelable layer applied onto the impermeable substrate; and
   a step of irradiating the inkjet ink for electron beam curing applied onto the ink for forming an alkali-peelable layer on the impermeable substrate with electron beams.
<2> The image recording method according to <1>,
   in which the ink for forming an alkali-peelable layer contains a compound including an acid group.
<3> The image recording method according to <2>,
   in which the ink for forming an alkali-peelable layer is an ink for electron beam curing, containing polymerizable monomers.
<4> The image recording method according to any one of <1> to <3>,
   in which the ink for forming an alkali-peelable layer is an ink for electron beam curing, containing polymerizable monomers including an acid group.
<5> The image recording method according to <3> or <4>,
   in which in a case where the ink for forming an alkali-peelable layer is used as a peeling ink, and
   the ink jet ink for electron beam curing, containing a pigment and polymerizable monomers, to be applied onto the ink for forming an alkali-peelable layer applied onto the impermeable substrate, is used as an ink for an image,
   at least one of the peeling ink or the ink for an image satisfies at least one of
   a condition that the ink contains a high-molecular-weight initiator X which is a hydrogen abstraction-type polymerization initiator having a molecular weight of 500 or more, or a condition that a total content of polymerization initiators other than the high-molecular-weight initiator X is less than 1% by mass.
<6> The image recording method according to any one of <3> to <5>,
   in which in a case where the ink for forming an alkali-peelable layer is used as a peeling ink, and
   the ink jet ink for electron beam curing, containing a pigment and polymerizable monomers, to be applied onto the ink for forming an alkali-peelable layer applied onto the impermeable substrate, is used as an ink for an image,
   a proportion of polyfunctional polymerizable monomers in an entire amount of the polymerizable monomers contained in at least one of the peeling ink or the ink for an image is 60% by mass or more.
<7> The image recording method according to any one of <1> to <6>,
   in which the ink for forming an alkali-peelable layer is an ink jet ink.
<8> The image recording method according to any one of <1> to <7>,
   in which the step of applying the ink for forming an alkali-peelable layer further includes irradiating the ink for forming an alkali-peelable layer applied onto the impermeable substrate with ultraviolet rays including radiation at a wavelength of 300 nm to 395 nm.
<9> The image recording method according to any one of <1> to <8>,
   in which the step of applying the inkjet ink for electron beam curing further includes irradiating the ink jet ink for electron beam curing applied onto the ink for forming an alkali-peelable layer on the impermeable substrate with ultraviolet rays including radiation at a wavelength of 300 nm to 395 nm.
<10> The image recording method according to any one of <1> to <9>,
   in which in a case where the ink jet ink for electron beam curing, containing a pigment and polymerizable monomers, to be applied onto the ink for forming an alkali-peelable layer applied onto the impermeable substrate, is used as an ink for an image,
   two or more kinds of the inks for an image are used,
   in the step of applying the inkjet ink for electron beam curing, two or more kinds of the inks for an image are applied onto the ink for forming an alkali-peelable layer applied onto the impermeable substrate, and
   in the step of irradiating with electron beams, two or more kinds of the inks for an image applied onto the ink for forming an alkali-peelable layer on the impermeable substrate are irradiated with electron beams.
<11> The image recording method according to <10>,
   in which two or more kinds of the inks for an image include a white ink containing a white pigment and a colored ink containing a colored pigment,
   in the step of applying the ink jet ink for electron beam curing, the white ink and the colored ink are applied in this order onto the ink for forming an alkali-peelable layer applied onto the impermeable substrate, and
   in the step of irradiating with electron beams, the white ink and the colored ink applied onto the ink for forming an alkali-peelable layer on the impermeable substrate are irradiated with electron beams.
<12> The image recording method according to any one of <1> to <11>,
   in which the impermeable substrate is a beverage container made of a resin or a food packaging material made of a resin.
<13> An ink set for an impermeable substrate, including:
   an ink for forming an alkali-peelable layer; and
   an inkjet ink for electron beam curing, containing a pigment and polymerizable monomers.
<14> The ink set for an impermeable substrate according to <13>,
   in which the ink for forming an alkali-peelable layer contains a compound including an acid group.

According to one aspect of the present disclosure, it is possible to provide an image recording method that enables recording of an image having excellent adhesiveness to an impermeable substrate and excellent alkali peelability, and an ink set for an impermeable substrate suitable for the image recording method.

### DESCRIPTION OF THE PREFERRED EMBODIMENTS

In the present disclosure, a numerical range shown using "to" indicates a range including the numerical values described before and after "to" as a lower limit and an upper limit.

In the present disclosure, in a case where a plurality of substances corresponding to respective components in a composition are present, the amount of the respective components in the composition indicates the total amount of the plurality of substances present in the composition unless otherwise specified.

In a numerical range described in a stepwise manner in the present disclosure, an upper limit or a lower limit described in a certain numerical range may be replaced with an upper limit or a lower limit in another numerical range described in a stepwise manner or a value described in an example.

In the present disclosure, the meaning of the term "step" includes not only an independent step but also a step whose intended purpose is achieved even in a case where the step is not clearly distinguished from other steps.

In the present disclosure, a combination of preferred aspects is a more preferred aspect.

In the present disclosure, "(meth)acrylate" is a concept that includes both the acrylate and methacrylate, "(meth)acryloyl group" is a concept that includes both the acryloyl group and methacryloyl group, and "(meth)acrylic acid" is a concept that includes both the acrylic acid and methacrylic acid.

In the present disclosure, "image" means general films formed using an ink, and "image recording" means the formation of an image (that is, a film).

In addition, in the present disclosure, the concept of "image" also includes a solid image.

### [Image Recording Method]

The image recording method according to an embodiment of the present disclosure includes:
a step of applying an ink for forming an alkali-peelable layer onto an impermeable substrate,
a step of applying an ink jet ink for electron beam curing, containing a pigment and polymerizable monomers, onto the ink for forming an alkali-peelable layer applied onto the impermeable substrate; and
a step of irradiating the inkjet ink for electron beam curing applied onto the ink for forming an alkali-peelable layer on the impermeable substrate with electron beams.

The image recording method of the embodiment of the present disclosure may include other steps as necessary.

In the present disclosure, the ink for forming an alkali-peelable layer means an ink used to form an alkali-peelable layer.

In the present disclosure, the alkali-peelable layer means a layer having a function of peeling an image off from an impermeable substrate in a case where the layer is interposed between the impermeable substrate and the image, and brought into contact with an aqueous alkali solution.

The alkali-peelable layer preferably has alkali solubility.

Here, the alkali solubility means a property that a solid substance is decomposed or dissolved in a case where the solid substance is immersed in a 1.5% by mass aqueous sodium hydroxide solution at 85°C, and the solid state cannot be maintained.

According to the image recording method according to the embodiment of the present disclosure, it is possible to record an image having excellent adhesiveness to an impermeable substrate and excellent alkali peelability.

Specifically, according to the image recording method according to the embodiment of the present disclosure, it is possible to obtain an image recorded matter having a structure in which an alkali-peelable layer and an image are arranged in this order on an impermeable substrate. The obtained image recorded matter has excellent adhesiveness between the image and the impermeable substrate through the alkali-peelable layer, and has excellent peelability of the image from impermeable substrate in a case where an aqueous alkali solution is brought into contact with the alkali-peelable layer.

A reason why the effect of the adhesiveness can be obtained according to the image recording method according to the embodiment of the present disclosure is considered to be that in a case where an inkjet ink for electron beam curing is irradiated with electron beams and the ink jet ink for electron beam curing is cured (hereinafter also referred to as "main curing") to obtain an image, chemical bonds are effectively formed between the ink jet ink for electron beam curing and the underlying alkali-peelable layer.

A reason why the effect of the alkali peelability can be obtained according to the image recording method according to the embodiment of the present disclosure is considered to be that an alkali-peelable layer by the ink for forming an alkali-peelable layer is interposed as an underlying layer between the impermeable substrate and the image derived from the inkjet ink for electron beam curing in the obtained image recorded matter. That is, it is considered that by bringing at least the alkali-peelable layer in the image recorded matter into contact with an aqueous alkali solution (for example, immersing the image recorded matter in the aqueous alkali solution), the alkali-peelable layer as the underlying layer can be dissolved, and eventually, the image can be peeled off from the impermeable substrate.

Hereinafter, each step of the image recording method according to the embodiment of the present disclosure will be described.

### «Step of Applying Ink for Forming Alkali-Peelable Layer»

The image recording method of the embodiment of the present disclosure includes a step of applying an ink for forming an alkali-peelable layer onto an impermeable substrate.

### <Impermeable Substrate>

In the present disclosure, the impermeable substrate refers to a substrate having a water absorption rate (unit: % by mass, measurement time: 24 hours) of less than 0.2 in ASTM D570 which is an ASTM test method.

The impermeable substrate is not particularly limited, but is preferably a resin substrate.

The resin substrate is not particularly limited, and examples thereof include a thermoplastic resin substrate.

Examples of the resin substrate include a substrate obtained by molding a thermoplastic resin into various shapes such as three-dimensional shapes of a bottle and the like, a sheet shape, a film shape, and the like.

The resin in the resin substrate preferably includes at least one selected from the group consisting of a polyester (for example, polyethylene terephthalate, and polyethylene naphthalate), polypropylene, polyethylene, polyvinyl chloride, nylon, polyimide, polycarbonate, and polystyrene.

The resin substrate may be subjected to a surface treatment from the viewpoint of improving the surface energy.

Examples of the surface treatment include a corona treatment, a plasma treatment, a flame treatment, a heat treatment, an abrasion treatment, a light irradiation treatment (UV treatment), and a flame treatment, but the surface treatment is not limited thereto.

As the impermeable substrate, a beverage container made of a resin (such as a PET bottle) or a food packaging material made of a resin is preferable.

Since image recording using these impermeable substrates requires the adhesiveness and the alkali peelability of the image in many cases, the application of the image recording method of the embodiment of the present disclosure is of great significance.

### <Applying Method>

The application of the ink for forming an alkali-peelable layer onto the impermeable substrate can be performed by applying a known method such as a coating method, an inkjet method, or an immersion method.

Examples of the coating method include known coating methods using a bar coater (such as a wire bar coater), an extrusion die coater, an air doctor coater, a blade coater, a rod coater, a knife coater, a squeeze coater, a reserve roll coater, a gravure coater, a flexo coater, or the like.

The details of the inkjet method are the same as those of the inkjet method that can be applied to the step of applying the ink jet ink for electron beam curing which will be described later.

### <Ink for Forming Alkali-Peelable Layer>

As described above, the ink for forming an alkali-peelable layer used in the present step is an ink for forming an alkali-peelable layer.

Hereinafter, a preferred aspect of the ink for forming an alkali-peelable layer (hereinafter also referred to as a "peeling ink") will be described.

### (Compound Including Acid Group)

It is preferable that the peeling ink contains at least one compound including an acid group.

In this manner, a function of the formed alkali-peelable layer (that is, a function of peeling the image off from the impermeable substrate in a case where the alkali-peelable layer is interposed between the impermeable substrate and the image, and brought into contact with an aqueous alkali solution) is more effectively exhibited. A reason thereof is considered to be that in the alkali-peelable layer containing the compound including an acid group, the compound including an acid group reacts with an alkali to form a salt, and thus, the water solubility of the alkali-peelable layer is improved.

Examples of the acid group in the compound including an acid group include a carboxy group, a sulfo group, a phosphoric acid group, a phosphonic acid group, and a sulfonamide group.

The compound including an acid group may be a low-molecular-weight compound (that is, a monomer) having a molecular weight of 1,000 or less, or a high-molecular-weight compound having a molecular weight of more than 1,000.

The compound including an acid group may be a polymerizable compound including an acid group (that is, a compound including an acid group and a polymerizable group).

As the polymerizable compound including an acid group, a polymerizable monomer including an acid group (that is, a compound including an acid group and a polymerizable group, and having a molecular weight of 1,000 or less) is preferable.

The polymerizable group in the polymerizable compound including an acid group (for example, the polymerizable monomer including an acid group) may be a cationically polymerizable group or a radically polymerizable group. From the viewpoint of curing properties, the polymerizable group is preferably a radically polymerizable group. In addition, from the viewpoint of curing properties, it is preferable that the radically polymerizable group is an ethylenically unsaturated group.

As the ethylenically unsaturated group, a (meth)acryloyl group, a vinyl group, an allyl group, or a styryl group is preferable, and the (meth)acryloyl group or the vinyl group is more preferable.

### - Polymerizable Monomer Including Acid Group -

From the viewpoint of further improving the function of the formed alkali-peelable layer and further improving the adhesiveness between the image and the impermeable substrate, the peeling ink preferably contains at least one polymerizable compound including an acid group, and more preferably contains at least one polymerizable monomer including an acid group.

Examples of a polymerizable monomer including a carboxy group as the acid group include 2-(meth)acryloyloxyethyl succinic acid, 2-(meth)acryloyloxyethyl phthalate, 2-(meth)acryloyloxyethyl hexahydrophthalate, 2-(meth)acryloyloxypropyl phthalate, 2-(meth)acryloyloxypropyl hexahydrophthalic acid, 2-carboxyethyl (meth)acrylate, and (meth)acrylic acid.

Examples of a polymerizable monomer including a sulfo group as the acid group include 2-hydroxy-3-sulfopropyl (meth)acrylate, 2-(meth)acrylamido-2-methylpropanesulfonic acid, 2-sulfoethyl (meth)acrylate, 3-sulfopropyl (meth)acrylate, and 4-styrenesulfonic acid.

Examples of a polymerizable monomer including a phosphoric acid group as the acid group include 2-phosphonooxyethyl (meth)acrylate and 2-(meth)acryloyloxyethyl acid phosphate.

Among these, the polymerizable monomer having a carboxy group as the acid group is preferable as the polymerizable monomer including an acid group.

The polymerizable monomer including an acid group may be either a monofunctional polymerizable monomer including an acid group or a polyfunctional polymerizable monomer including an acid group, but is preferably the monofunctional polymerizable monomer including an acid group, more preferably a monofunctional polymerizable monomer including a carboxy group, and still more preferably a monofunctional (meth)acrylate including a carboxy group.

### - High-Molecular-Weight Compound Having Molecular Weight of More Than 1,000, Which Includes Acid Group -

In addition, as described above, the compound including an acid group may be a high-molecular-weight compound having a molecular weight of more than 1,000. The high-molecular-weight compound having a molecular weight of more than 1,000 may include a polymerizable group.

As the high-molecular-weight compound having a molecular weight of more than 1,000, a commercially available product may be used.

Examples of the commercially available product thereof include:
"GENOMER 7151" (carboxy-modified polyester acrylate) manufactured by Rahn AG, and
"ARUFON (registered trademark) UF-5000" manufactured by Toagosei Co., Ltd.

In a case where the peeling ink contains a compound including an acid group, the content of the compound including an acid group with respect to an entire amount of the peeling ink is preferably 1% by mass to 70% by mass, more preferably 1% by mass to 50% by mass, still more preferably 2% by mass to 40% by mass, and even still more preferably 3% by mass to 30% by mass.

### (Polymerizable Monomer)

From the viewpoint of further improving the adhesiveness between the image and the impermeable substrate through the alkali-peelable layer, it is preferable that the peeling ink contains at least one polymerizable monomer.

Here, the polymerizable monomer means a compound having a molecular weight of 1,000 or less, which includes a polymerizable group.

The polymerizable monomer as mentioned herein may be the above-mentioned polymerizable monomer including an acid group or may be a polymerizable monomer including no acid group.

A preferred aspect of the polymerizable group in the polymerizable monomer (that is, the polymerizable monomer including an acid group and/or the polymerizable monomer including no acid group; the same applies hereinafter) is as described as the preferred aspect of "the polymerizable group in the polymerizable monomer including an acid group".

The polymerizable monomer including an acid group is as described above as an aspect of the compound including an acid group.

Hereinafter, preferred aspects and specific examples of the polymerizable monomer will be described focusing on the polymerizable monomer including no acid group.

The molecular weight of the polymerizable monomer is 1,000 or less, and more preferably 800 or less.

A lower limit of the molecular weight of the polymerizable monomer is, for example, 58 (the molecular weight of methyl vinyl ether).

The polymerizable monomer may be a monofunctional polymerizable monomer including one polymerizable group or a polyfunctional polymerizable monomer including two or more polymerizable groups.

### - Monofunctional Polymerizable Monomer -

The monofunctional polymerizable monomer is not particularly limited as long as it is a compound including one polymerizable group. From the viewpoint of curing properties, the monofunctional polymerizable monomer is preferably a monofunctional radically polymerizable monomer, and more preferably a monofunctional ethylenically unsaturated monomer.

Examples of the monofunctional ethylenically unsaturated monomer include monofunctional (meth)acrylate, monofunctional (meth)acrylamide, a monofunctional aromatic vinyl compound, monofunctional vinyl ether, and a monofunctional N-vinyl compound.

With regard to specific examples of the monofunctional polymerizable monomer, reference can be made to, for example, paragraphs 0023 to 0028 of WO2021/193230A.

### - Polyfunctional Polymerizable Monomer -

The polyfunctional polymerizable monomer is not particularly limited as long as it is a monomer including two or more polymerizable groups. From the viewpoint of curing properties, the polyfunctional polymerizable monomer is preferably a polyfunctional radically polymerizable monomer, and more preferably a polyfunctional ethylenically unsaturated monomer.

Examples of the polyfunctional ethylenically unsaturated monomer include a polyfunctional (meth)acrylate compound and a polyfunctional vinyl ether.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecanedimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, and tris(2-acryloyloxyethyl) isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

From the viewpoint of further improving the adhesiveness of the image and further suppressing a migration which will be described later, it is preferable that the polymerizable monomers which can be contained in the peeling ink include polyfunctional polymerizable monomers.

In this case, from the viewpoint of further improving the alkali peelability of the image, the proportion of the polyfunctional polymerizable monomers in an entire amount of the polymerizable monomers contained in the peeling ink is preferably 30% by mass or more, more preferably 50% by mass or more, and still more preferably 60% by mass or more.

The proportion of the polyfunctional polymerizable monomers may be 100% by mass.

From the viewpoint of reducing a viscosity of the ink and improving jettability, the polyfunctional polymerizable monomers preferably include at least one of a bifunctional polymerizable monomer (that is, a compound including two polymerizable groups) or a trifunctional polymerizable monomer (that is, a compound including three polymerizable groups).

In this case, the total proportion of the bifunctional polymerizable monomer and the trifunctional polymerizable monomer in the entire amount of the polymerizable monomers contained in the peeling ink is preferably 30% by mass or more, more preferably 50% by mass or more, and still more preferably 60% by mass or more.

The total proportion of the bifunctional polymerizable monomer and the trifunctional polymerizable monomer may be 100% by mass.

From the viewpoint of reducing the viscosity of the ink and improving jettability, it is more preferable that the polyfunctional polymerizable monomers include bifunctional polymerizable monomers.

In this case, the proportion of the bifunctional polymerizable monomers in the entire amount of the polymerizable monomers contained in the peeling ink is preferably 30% by mass or more, more preferably 50% by mass or more, and still more preferably 60% by mass or more.

In a case where the peeling ink contains polymerizable monomers, from the viewpoint of further improving the adhesiveness of the image, the content of the polymerizable monomers with respect to the entire amount of the peeling ink is preferably 50% by mass or more, more preferably 60% by mass, and still more preferably 80% by mass or more.

### (Ink for Electron Beam Curing (Peeling Ink))

In a case where the peeling ink of the present disclosure contains polymerizable monomers (that is, polymerizable monomers including an acid group and/or polymerizable monomers including no acid group), it is more preferable that the peeling ink of the present disclosure is an ink for electron beam curing. In this manner, the adhesiveness of the image is further improved.

In the present disclosure, the ink for electron beam curing means an ink that is cured by irradiation with electron beams to obtain an image.

In the present disclosure, final curing for obtaining an image (that is, curing by irradiation with electron beams) may be referred to as "main curing".

In the present disclosure, curing an ink by pinning exposure with ultraviolet rays (for example, LED light) before the main curing is referred to as "temporary curing".

The ink for electron beam curing in the present disclosure is an ink that is intended to be subjected to main curing by irradiation with electron beams, but may have a property of being temporarily cured by pinning exposure.

From the viewpoint of further improving the adhesiveness of the image and further suppressing the migration, the peeling ink in an aspect in which it is the ink for electron beam curing preferably satisfies at least one of a condition that the ink contains a high-molecular-weight initiator X which is a hydrogen abstraction-type polymerization initiator having a molecular weight of 500 or more, or a condition that a total content of the polymerization initiators other than the high-molecular-weight initiator X is less than 1% by mass.

The ink satisfying at least one of the conditions is insufficiently cured by irradiation with ultraviolet rays in some cases. However, the ink satisfying at least one of the conditions can be sufficiently cured by irradiation with electron beams.

In the present disclosure, the migration means a phenomenon in which a component in an image recorded with an ink is eluted from the image, and the migration amount means an amount of the component eluted due to the migration.

Examples of the component which is easily eluted include a low-molecular-weight compound (for example, a photopolymerization initiator having a molecular weight of less than 500).

In a case where an image is recorded on the above-mentioned beverage container made of a resin or food packaging material made or a resin as the impermeable substrate by the image recording method according to the embodiment of the present disclosure, the migration (that is, the elution of a component from the image) is particularly significant.

### (High-Molecular-Weight Initiator X)

The peeling ink in an aspect in which it is an ink for electron beam curing preferably contains at least one kind of high-molecular-weight initiator X (that is, a hydrogen abstraction-type polymerization initiator having a molecular weight of 500 or more).

In this manner, the curing properties of the peeling ink are further improved, and thus, a function of the formed alkali-peelable layer is further improved.

The high-molecular-weight initiator X is a hydrogen abstraction-type polymerization initiator having a molecular weight of 500 or more.

The molecular weight of 500 or more of the high-molecular-weight initiator X contributes to suppression of the migration.

The high-molecular-weight initiator X that is a hydrogen abstraction-type contributes to the curing properties against irradiation with electron beams.

As the high-molecular-weight initiator X, at least one of a thioxanthone compound or a benzophenone compound is preferable.

Examples of the thioxanthone compound as the high-molecular-weight initiator X include a compound represented by Formula (S1).

Examples of the benzophenone compound as the high-molecular-weight initiator X include a compound represented by Formula (S2).

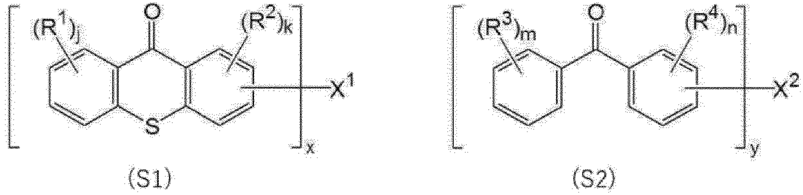

In Formula (S 1) and Formula (S2), R¹, R², R³, and R⁴ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, in which in a case where j, k, m, and n are integers of 2 or more, a plurality of R¹'s, R²'s, R³'s, and R⁴'s that are present may be the same as or different from each other, X¹ represents an x-valent linking group including at least any one of a hydrocarbon chain, an ether bond, or an ester bond, and X² represents a y-valent linking group including at least any one of a hydrocarbon chain, an ether bond, or an ester bond.

With respect to preferred aspects and specific examples of the compound represented by Formula (S1), reference can be made to the description in paragraphs 0035 to 0053 of JP2014-162828A.

As the compound represented by Formula (S 1), compounds on the market can also be used.

Specific examples thereof include:
Speedcure (registered trademark) 7010 (1,3-di({α-[1-chloro-9-oxo-9H-thioxanthen-4-yl]oxy}acetylpoly[oxy(1-methylethylene)]oxy)-2,2-bis({α-[1-chloro-9-oxo-9H-thioxanthen-4-yl]oxy}acetylpoly[oxy(1-methylethylene)]oxymethyl)propane, CAS No. 1003567-83-6) manufactured by Lambson Ltd.;
OMNIPOL (registered trademark) TX (polybutyleneglycol bis(9-oxo-9H-thioxanthenyloxy)acetate, CAS No. 813452-37-8) manufactured by IGM Resins B. V; and
GENOPOL TX-2 manufactured by Rahn AG.

With respect to preferred aspects and specific examples of the compound represented by Formula (S2), reference can be made to the description in paragraphs 0054 to 0075 of JP2014-162828A.

As the compound represented by Formula (S2), compounds on the market can also be used.

Specific examples thereof include OMNIPOL BP (polybutylene glycol bis(4-benzoylphenoxy)acetate, CAS No. 515136-48-8) manufactured by IGM Resins B. V.

The content of the high-molecular-weight initiator X with respect to the entire amount of the ink is preferably 0.1% by mass to 3.0% by mass, and more preferably 0.1% by mass to 2.0% by mass.

### (Polymerization Initiators Other than High-Molecular-Weight Initiator X)

The peeling ink in the aspect in which it is an ink for electron beam curing may contain at least one kind of polymerization initiator other than the high-molecular-weight initiator X.

It should be noted that from the viewpoint of suppressing the migration, the total content of the polymerization initiators other than the high-molecular-weight initiator X with respect to the entire amount of the peeling ink is preferably less than 1% by mass.

Here, the concept "the total content of the polymerization initiators other than the high-molecular-weight initiator X with respect to the entire amount of the peeling ink is less than 1% by mass" also includes a case where the peeling ink does not include polymerization initiators other than the high-molecular-weight initiator X (that is, a case where the total content is 0% by mass).

Examples of the polymerization initiator other than the high-molecular-weight initiator X include a polymerization initiator having a molecular weight of less than 500 (hereinafter also referred to as a low-molecular-weight initiator).

Examples of the low-molecular-weight initiator include:
bis(2,4,6-trimethylbenzoyl)phenylphosphine oxide (for example, Omnirad 819 manufactured by IGM Resins B. V.), and
2-isopropylthioxanthone.

With regard to the low-molecular-weight initiator, reference can be made to, for example, paragraphs 0070, 0072, 0076, and 0077 of WO2021/193230A.

### (Amine Having Molecular Weight of 500 or More)

The peeling ink may further contain at least one kind of amine having a molecular weight of 500 or more (hereinafter also referred to as a "high-molecular-weight amine").

In this case, the content of the high-molecular-weight amine is preferably more than 0% by mass and 5% by mass or less, and more preferably 0.1% by mass to 5.0% by mass with respect to the entire amount of the peeling ink.

The high-molecular-weight amine only needs to be a compound that includes an amino group (that is, that includes at least one of an unsubstituted amino group or a substituted amino group) and has a molecular weight of 500 or more, and there is no other particular limitation.

Examples of the high-molecular-weight amine include a compound represented by Formula (X).

NR¹R²R³ ... Formula (X)

[In Formula (X), R¹, R², and R³ each independently represent a hydrogen atom or a substituent, provided that R¹, R², and R³ are selected so that the molecular weight of the compound represented by Formula (X) is 500 or more.]

In Formula (X), it is preferable that two or more of R¹, R², or R³ are substituents, and it is more preferable that three of R¹, R², and R³ are substituents.

In addition, it is also a preferred aspect that R¹, R², and R³ include a (meth)acryloyloxy group.

The high-molecular-weight amine includes at least one amino group, but from the viewpoints of the viscosity and the suppression of the migration, the high-molecular-weight amine preferably includes 1 to 6 amino groups, more preferably includes 1 to 3 amino group, and still more preferably includes 1 or 2 amino groups.

In addition, in a case where the high-molecular-weight amine includes a (meth)acryloyloxy group, from the viewpoints of the reactivity and the viscosity, the high-molecular-weight amine preferably includes 1 to 6 (meth)acryloyl groups, more preferably includes 1 to 4 (meth)acryloyl groups, and still more preferably includes one or two (meth)acryloyl groups.

As the high-molecular-weight amine, a commercially available product may be used.

Examples of the commercially available product of the high-molecular-weight amine include:
GENOMER 5161, GENOMER 5271, GENOMER 5275, and GENOMER 5795 (all available from RAHN AG);
CN371, CN373, CN383, CN384, CN386, CN501, CN550, and CN551 (all available from Sartomer Company, Inc.);
EBECRYL 7100, EBECRYL 80, EBECRYL 81, EBECRYL 83, EBECRYL 84, and EBECRYL P 115 (all available from Daicel Cytec Co., Ltd.);
Laromer PO77F (LR8946), Laromer LR8956, Laromer LR8996, and Laromer PO94F (LR8894) (all available from BASF SE);
Photomer 4771, Photomer 4775, Photomer 4967, Photomer 5006, Photomer 5096, Photomer 5662, and Photomer 5930 (all available from Cognis Corporation);
Doublecure EPD, Doublecure OPD, Doublecure 115, Doublecure 225, Doublecure 645, PolyQ222, PolyQ226, PolyQ224, and PolyQ101 (all available from Double Bond Chemical Ind., Co., Ltd.); and
Omnipol ASA (available from IGM Resins).

With regard to the high-molecular-weight amine, reference can be made to, for example, descriptions disclosed in paragraphs 0072 to 0074 of JP2011-68783A and paragraphs 0069 and 0070 of JP2015-160890A.

The molecular weight of the high-molecular-weight amine is 500 or more, but from the viewpoint of further suppressing the migration, the molecular weight is preferably 700 or more, more preferably 800 or more, and still more preferably 1,000 or more.

An upper limit of the molecular weight of the high-molecular-weight amine is preferably 10,000, more preferably 7,000, and still more preferably 5,000.

The high-molecular-weight amine preferably includes an amine having a molecular weight of 1,000 or more.

In this case, as the high-molecular-weight amine, an amine having a molecular weight of 1,000 or more and an amine having a molecular weight of 500 or more and less than 100 may be used in combination.

The proportion of the amine having a molecular weight of 1,000 or more in the high-molecular-weight amine is preferably 50% by mass to 100% by mass, more preferably 60% by mass to 100% by mass, and still more preferably 80% by mass to 100% by mass.

### (Silicone-Based Surfactant)

The peeling ink may further contain at least one kind of silicone-based surfactant.

Here, the silicone-based surfactant is a surfactant including a siloxane structure. Examples of the silicone-based surfactant include BYK-UV 3500, 3505, 3510, 3530, 3570, 3575, 3576, 3760, 378, 375, 306, 333, 377, 330, 307, 342, 302, 300, 331, 325, 320, 315 N, 326, and 322 (all manufactured by BYK); TEGO Rad 2100, 2200, 2250, 2300, 2500, 2600, 2700, and 2010; TEGO Glide 100, 110, 130, 406, 410, 411, 415, 420, 432, 435, 440, 450, 482, A115, B1484, and ZG400; and TEGO Flow300, 370, 425, ATF2, and ZFS 460 (all manufactured by Evonik Industries AG).

A content of the silicone-based surfactant is preferably 0.1% by mass or more, more preferably 0.3% by mass or more, and still more preferably 1% by mass or more with respect to the entire amount of the ink.

An upper limit of the content of the silicone-based surfactant is preferably 10% by mass, and more preferably 5% by mass with respect to the entire amount of the ink.

### (Other Surfactants)

The peeling ink may further contain at least one kind of surfactant other than the silicone-based surfactant.

The type of such another surfactant is not particularly limited, and may be any of an anionic surfactant, a cationic surfactant, or a nonionic surfactant.

In addition, examples of such another surfactant include an acrylic surfactant and a fluorine-based surfactant.

The acrylic surfactant is a surfactant having a structure derived from an acrylic monomer. Examples of the acrylic surfactant include BYK 361 N, BYK 350, BYK 356, and BYK-UV 3535 (all available from BYK).

The fluorine-based surfactant is a surfactant including a perfluoroalkyl group. Examples of the fluorine-based surfactant include MEGAFACE F-114, F-251, F-253, F-281, F-410, F-477, F-510, F-551, F-552, F- 553, F-554, F-555, F-556, F-557, F-558, F-559, F-560, F-561, F-562, F-563, F-565, F-568 F-569, F-570, F-572, F-574, F-575, F-576, R-40, R-40-LM, R-41, R-94, RS-56, RS-72-K, RS-75, RS-76-E, RS-76-NS, RS-78, RS-90, and DS-21 (all manufactured by DIC Corporation).

### (Other Components)

As necessary, the peeling ink may contain other components in addition to the components, as necessary. Examples of such another component include an organic solvent.

In addition, the content of the pigment is preferably less than 1% by mass with respect to the entire amount of the peeling ink. In this manner, an influence of the alkali-peelable layer on the tint of an image obtained by the inkjet ink for electron beam curing, containing a pigment and a polymerizable compound, can be reduced.

Here, the concept "the content of the pigment with respect to the entire amount of the peeling ink is less than 1% by mass" also includes a case where the peeling ink does not contain a pigment (that is, a case where the content is 0% by mass).

### (Ink Jet Ink)

The peeling ink is preferably an inkjet ink.

In a case where the peeling ink is an inkjet ink, the configuration of an image recording device can be simplified since an ink for image recording applied next to the peeling ink is also the inkjet ink.

In addition, in a case where the peeling ink is an ink jet ink, an effect that the peeling ink can be selectively applied only to a required region such as a region where an image is to be recorded is also achieved.

### (Physical Properties)

The viscosity of the peeling ink in a case where the peeling ink is an inkjet ink is preferably in a range of 0.5 mPa s to 30 mPa s, more preferably in a range of 2 mPa s to 20 mPa s, preferably in a range of 2 mPa s to 15 mPa s, and even still more preferably in a range of 3 mPa s to 10 mPa·s.

The viscosity is measured at 25°C using a viscometer, for example, a TV-22 type viscometer (manufactured by Toki Sangyo Co., Ltd.).

The surface tension of the peeling ink in a case where the peeling ink is an ink jet ink is preferably 60 mN/m or less, more preferably in a range of 20 mN/m to 50 mN/m, and still more preferably in a range of 25 mN/m to 45 mN/m.

The surface tension is measured at 25°C by a plate method using a surface tension meter, for example, an automatic surface tension meter (product name, "CBVP-Z", manufactured by Kyowa Interface Science Co., Ltd.).

### <Irradiation with Radiation>

The step of applying the peeling ink may further include irradiating the peeling ink applied onto the impermeable substrate with radiation (that is, ultraviolet rays (UV)) at a wavelength of 300 nm to 395 nm.

The irradiation with radiation is effective as the pinning exposure.

That is, the peeling ink applied onto the impermeable substrate can be temporarily cured by the irradiation with radiation as the pinning exposure. In this manner, the effect of main curing by the irradiation with electron beams is obtained more effectively, and as a result, the function of the obtained alkali-peelable layer is further improved, and the adhesiveness between the image and the impermeable substrate through the alkali-peelable layer is also further improved.

In a case where the pinning exposure is performed, it is preferable to perform irradiation with the ultraviolet rays for pinning exposure within 0.1 seconds to 5 seconds from the moment of the peeling ink being landed.

As ultraviolet (UV) light source used for the irradiation with UV, a known UV light source in which at least one of an illuminance or an irradiation time is variable can be used.

As the UV light source, a light emitting diode (LED) light source is preferable.

An illuminance of the irradiation with ultraviolet rays (UV) is preferably 0.10 W/cm² to 0.50 W/cm², more preferably 0.20 W/cm² to 0.50 W/cm², and still more preferably 0.25 W/cm² to 0.45 W/cm².

An irradiation energy of the ultraviolet rays (UV) is preferably 2 mJ/cm² to 20 mJ/cm², and more preferably 4 mJ/cm² to 15 mJ/cm².

A reaction rate of the peeling ink after the pinning exposure is preferably 10% to 80%.

Here, the reaction rate of the peeling ink means a polymerization rate of the polymerizable monomers contained in the peeling ink, which is determined by high-performance liquid chromatography.

The reaction rate of the peeling ink is preferably 15% or more.

In addition, the reaction rate of the peeling ink is preferably 75% or less, more preferably 50% or less, preferably 40% or less, more preferably 30% or less, and still more preferably 25% or less.

Furthermore, a reaction rate of the ink after a main exposure which will be described later is preferably more than 80% and 100% or less, more preferably 85% to 100%, and still more preferably 90% to 100%.

The reaction rate of the ink is determined by the following method.

A substrate which has been subjected to an operation until the irradiation of the ink with active energy rays is completed is prepared. A sample piece having a size of 20 mm × 50 mm (hereinafter referred to as a sample piece after irradiation) is cut out from a region of the substrate where the ink film is present. The cut sample piece after irradiation is immersed in 10 mL of tetrahydrofuran (THF) for 24 hours to obtain an eluate containing the eluted ink. The obtained eluate is subjected to high-performance liquid chromatography to obtain an amount of the polymerizable monomers (hereinafter referred to as an "amount X1 of monomers after irradiation").

Separately, the same operation as described above is performed, except that the ink on the substrate is not irradiated with the active energy ray, and an amount of polymerizable monomers (hereinafter called "amount X1 of monomers before irradiation") is obtained.

The reaction rate (%) of the ink is determined by the following expression, based on the amount X1 of monomers after irradiation and the amount X1 of monomers before irradiation. Reaction rate of ink (%) = ((Amount X1 of monomers before irradiation-Amount X1 of monomers after irradiation)/Amount X1 of monomers before irradiation)×100

From the viewpoint of achieving the above-described reaction rate of the ink more easily, an exposure amount of the radiation for the pinning exposure is preferably 10 mJ/cm² to 100 mJ/cm² and more preferably 20 mJ/cm² to 60 mJ/cm².

### «Step of Applying Ink Jet Ink for Electron Beam Curing»

The image recording method of the embodiment of the present disclosure includes a step of applying an ink jet ink for electron beam curing (hereinafter also referred to as "ink for an image") containing a pigment and polymerizable monomers onto a peeling ink applied onto an impermeable substrate.

An image is obtained by subjecting the ink for an image applied onto the peeling ink to main curing in the step of irradiating the peeling ink with electron beams which will be described later.

One kind of the ink for an image (that is, one color ink) applied in the present step may be used, or two or more kinds of the inks of an image (that is, an ink set consisting of two or more color inks) may be used.

### <Applying Method>

An ink jet recording method is adopted for application of the ink for an image.

The application of the ink for an image by the ink jet recording method is not particularly limited as long as it is a method enabling an image to be recorded, and a known method can be used.

Examples of the ink jet recording method include an electric charge control method of ejecting an ink by using an electrostatic attraction force; a drop-on-demand method (pressure pulse method) of using a vibration pressure of a piezo element; an acoustic ink jet method of converting an electric signal into an acoustic beam, irradiating an ink, and ejecting the ink using a radiation pressure; and a thermal inkjet (Bubble jet (registered trademark)) method of heating an ink to form air bubbles and utilizing the generated pressure.

Examples of ink jet heads used in the inkjet recording method include inkjet heads for a shuttle method of using short serial heads that are caused to scan a substrate in a width direction of the substrate to perform recording, and inkjet heads for a line method of using line heads that each consist of recording elements arranged for the entire area of each side of a substrate.

In the line method, pattern formation can be performed on the entire surface of a substrate by scanning the substrate in a direction perpendicular to a direction in which the recording elements are arranged, and a transport system such as a carriage that scans a short head is unnecessary. In addition, in the line method, complicated scanning control for moving a carriage and a substrate is not necessary, and only a substrate moves. Therefore, the recording speed can be further increased in the line method than in the shuttle method.

A liquid droplet volume of the ink for an image jetted from the ink jet head is preferably 1 picoliter (pL) to 100 pL, more preferably 3 pL to 80 pL, and still more preferably 3 pL to 50 pL.

### <Ink for Image>

Hereinafter, the ink for an image (that is, the inkjet ink for electron beam curing, containing a pigment and polymerizable monomers) will be described.

### (Pigment)

The ink for an image contains at least one kind of pigment.

A commercially available organic pigment or inorganic pigment may be used as the pigment.

Examples of the pigment include the pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

The pigment may be a white pigment or a colored pigment.

Examples of the colored pigment include a cyan pigment, a magenta pigment, a yellow pigment, and a black pigment, and may also include pigments having other color tones.

For example, in a case where at least two kinds of inks for an image are used in the step of applying the ink for an image, the at least two kinds of inks for an image may include a white ink containing a white pigment and a colored ink containing a colored pigment. In this case, one kind of the colored ink may be used, or two or more kinds of the colored inks may also be used. For example, two or more kinds of colored inks selected from a cyan ink containing a cyan pigment, a magenta ink containing a magenta pigment, a yellow ink containing a yellow pigment, and a black ink containing a black pigment may be used.

A content of the pigment (that is, the total content of the pigments contained in the ink for an image) with respect to an entire amount of the ink for an image is preferably 1% by mass to 30% by mass, more preferably 1% by mass to 20% by mass, and still more preferably 2% by mass to 10% by mass

The pigment can be contained in the ink as a pigment dispersion liquid.

The pigment dispersion liquid is a liquid obtained by dispersing the pigment in a liquid medium using a dispersant, and contains at least the pigment, the dispersant, and the liquid medium.

Examples of the liquid medium include an organic solvent.

In addition, the liquid medium may be a polymerizable monomer to be contained in the ink for an image.

Furthermore, in a case where a self-dispersing pigment is used as the pigment, the ink may not contain a dispersant.

### (Dispersant)

Examples of the dispersant include low-molecular-weight dispersants having a molecular weight of less than 1,000, such as a higher fatty acid salt, alkyl sulfate, alkyl ester sulfate, alkyl sulfonate, sulfosuccinate, naphthalene sulfonate, alkyl phosphate, polyoxyalkylene alkyl ether phosphate, polyoxyalkylene alkyl phenyl ether, polyoxyethylene polyoxypropylene glycol, glycerin fatty acid ester, sorbitan fatty acid ester, polyoxyethylene fatty acid amide, and amine oxide.

In addition, examples of the dispersant include a high-molecular-weight dispersant having a molecular weight of 1,000 or more, which is obtained by copolymerizing a hydrophilic monomer and a hydrophobic monomer. From the viewpoint of dispersion stability, as the hydrophilic monomer, a dissociable group-containing monomer is preferable, and a dissociable group-containing monomer which has a dissociable group and an ethylenically unsaturated bond is preferable. Examples of the dissociable group-containing monomer include a carboxy group-containing monomer, a sulfonic acid group-containing monomer, and a phosphoric acid group-containing monomer. From the viewpoint of dispersion stability, the hydrophobic monomer is preferably an aromatic group-containing monomer which has an aromatic group and an ethylenically unsaturated bond, or an aliphatic hydrocarbon group-containing monomer which has an aliphatic hydrocarbon group and an ethylenically unsaturated bond. The polymer may be any of a random copolymer or a block copolymer.

The dispersant may be a commercially available product. Examples of the commercially available product thereof include:
DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (all manufactured by BYK Chemie GmbH); and
SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (all manufactured by Lubrizol Corporation).

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

From the viewpoint of dispersion stability, a content of the dispersant with respect to the content of the pigment in the ink is preferably 0.05 to 1.0, and more preferably 0.1 to 0.5 on a mass basis.

### (Polymerizable Monomer)

The ink for an image contains at least one kind of polymerizable monomer.

Specific examples and preferred aspects of the polymerizable monomers contained in the ink for an image (including preferred contents thereof in the ink; the same applies hereinafter) are the same as the specific examples and the preferred aspects of the above-mentioned polymerizable monomers which can be contained in the peeling ink.

### (Other Components)

Specific examples and preferred aspects of other components other than the above-mentioned components which can be contained in the ink for an image (including preferred contents thereof in the ink; the same applies hereinafter) are the same as the specific examples and the preferred aspects of the above-mentioned components which can be contained in the peeling ink in the aspect in which the peeling ink is an ink for electron beam curing.

For example, from the viewpoint of further improving the adhesiveness of the image and further suppressing the migration, the ink for an image preferably satisfies at least one (hereinafter referred to as Condition X1) of a condition that the ink contains a high-molecular-weight initiator X which is a hydrogen abstraction-type polymerization initiator having a molecular weight of 500 or more, or a condition that a total content of the polymerization initiators other than the high-molecular-weight initiator X is less than 1% by mass.

In the image recording method of the embodiment of the present disclosure, it is preferable that at least one of the ink for an image or the peeling ink satisfies Condition X1, and it is more preferable that both the ink for an image and the peeling ink satisfy Condition X1.

From the viewpoint of further improving the adhesiveness of the image and further suppressing the migration, a proportion of polyfunctional polymerizable monomers in the entire amount of the polymerizable monomers contained in the ink for an image is preferably 60% by mass to 100% by mass (hereinafter referred to as Condition X2).

In the image recording method of the embodiment of the present disclosure, it is preferable that at least one of the ink for an image or the peeling ink satisfies Condition X2, and it is more preferable that both the ink for an image and the peeling ink satisfy Condition X2.

Preferred physical properties of the ink for an image are the same as the preferred aspects of the peeling ink in a case where the ink for an image is the above-mentioned ink jet ink.

### <Irradiation with Radiation>

The step of applying the ink for an image may further include irradiating the ink for an image applied onto the impermeable substrate with radiation (that is, ultraviolet rays (UV)) at a wavelength of 300 nm to 395 nm.

The irradiation with radiation is effective as the pinning exposure.

That is, the ink for an image can be temporarily cured by the irradiation with radiation as the pinning exposure. In this manner, the effect of the main curing by irradiation with electron beams is obtained more effectively, and as a result, the density of the obtained image is further improved.

Preferred conditions of the pinning exposure of the ink for an image are the same as the above-described preferred conditions of the pinning exposure for the peeling ink.

In a case where two or more kinds of the inks for an image are used in the image recording method of the embodiment of the present disclosure (that is, in a case where an ink set consisting of two or more color inks is used), it is preferable that pinning exposure for the n^{th} (n is an integer of 1 or more) applied ink is carried out before the (n+1)^{th} ink is applied.

### «Step of Applying Electron Beams (EB)»

The image recording method of the embodiment of the present disclosure includes a step of irradiating the ink for an image applied onto the impermeable substrate with electron beams.

In the present step, at least the ink for an image on the impermeable substrate is irradiated with electron beams.

In the present step, the ink for an image and the peeling ink on the impermeable substrate may be collectively irradiated with electron beams. In a case where the peeling ink is an ink for electron beam curing, the adhesiveness between the image and the impermeable substrate through the alkali-peelable layer can be further improved and the migration from the alkali peeled layer can be further suppressed by collectively irradiating the ink for an image and the peeling ink with electron beams.

The irradiation with electron beams can be performed using an electron beam irradiating apparatus.

Conditions for applying the electron beam are not particularly limited.

The acceleration voltage in the electron beam irradiation is, for example, 50 kV to 200 kV, and preferably 50 kV to 110 kV

The dose in the electron beam irradiation is, for example, 10 kGy to 100 kGy, and preferably 30 kGy to 90 kGy.

A treatment speed in the electron beam irradiation is, for example, 1 m/min to 200 m/min.

The irradiation with electron beams may be performed in an environment in which an oxygen concentration is 20% by volume or less (more preferably less than 20% by volume, and still more preferably 5% by volume or less). In this manner, the polymerization inhibition due to oxygen is suppressed and the migration is further suppressed.

As the environment at an oxygen concentration of less than 20% by volume, an environment in the presence of an inert gas (for example, a nitrogen gas, an argon gas, or a helium gas) is suitable.

The image recording method according to the embodiment of the present disclosure may include a step other than the above-mentioned steps, as necessary.

Hereinafter, a recording method A that is a specific example of the image recording method according to the embodiment of the present disclosure will be described.

### <<Recording Method A»

The recording method A is a method using two or more kinds of inks for an image.

In the step of applying the ink for an image in the recording method A, two or more kinds of inks for an image are applied onto the peeling ink applied onto the impermeable substrate.

In the step of irradiating the ink for an image with electron beams in the recording method A, two or more kinds of the inks for an image are irradiated with electron beams.

According to the recording method A, a multicolor image can be obtained by using two or more kinds of inks for an image. Further, in a case where two or more kinds of inks for an image are applied in layers, a multilayer image can be obtained.

Even in the recording method A, the effects of the image recording method according to the embodiment of the present disclosure can be obtained.

Examples of two or more kinds of inks for an image include two or more kinds selected from the group consisting of a white ink containing a white pigment and a colored ink containing a colored pigment.

Examples of the colored ink containing a colored pigment include a cyan ink containing a cyan pigment, a magenta ink containing a magenta pigment, a yellow ink containing a yellow pigment, and a black ink containing a black pigment.

From the viewpoint of the visibility and the like of a colored image formed by the colored ink, as the combination of two or more kinds of inks for an image,
a combination of the white ink and the colored ink is preferable, and
a combination of the white ink and one or more kinds of inks selected from the group consisting of a cyan ink, a magenta ink, a yellow ink, and a black ink is more preferable.

In the recording method A, from the viewpoint of a density of the image, it is preferable to subject at least one kind of ink for an image among two or more kinds of inks for an image to the above-mentioned pinning exposure.

A preferred aspect of the recording method A is an aspect in which
two or more kinds of the inks for an image include a white ink containing a white pigment and a colored ink containing a colored pigment, and
the step of applying the ink for an image is a step of applying the white ink and the colored ink in this order onto the peeling ink applied onto the impermeable substrate.

In such a preferred aspect, a colored image (for example, a character image and a figure image) derived from the colored ink can be recorded on the white image derived from the white ink on the impermeable substrate as a background. In this manner, a colored image having excellent visibility can be obtained.

In a case where the recording method A in such a preferred aspect is applied to image recording with regard to a beverage container, an image can be recorded on the outside of the container that does not come into contact with a beverage.

Similarly, in a case where the recording method A of such a preferred embodiment is applied to image recording with regard to a food packaging material, an image can be recorded on the outside of the packaging material that does not come into contact with a food. Therefore, the recording method A is suitable for recording of an image in the beverage or food field.

In a preferred aspect of the recording method A, it is preferable to subject at least the white ink to the above-mentioned pinning exposure from the viewpoint of the density of the colored image.

### [Ink Set for Impermeable Substrate]

The ink set for an impermeable substrate of an embodiment of the present disclosure includes:
a peeling ink (that is, an ink for forming an alkali-peelable layer), and
an ink for an image (that is, an ink jet ink for electron beam curing, containing a pigment and polymerizable monomers).

According to the ink set for an impermeable substrate of the embodiment of the present disclosure, the image recording method of the embodiment of the present disclosure described above can be implemented.

Therefore, according to the ink set for an impermeable substrate of the embodiment of the present disclosure, the same effects as those of the image recording method of the embodiment of the present disclosure can be obtained.

The preferred embodiments of the peeling ink and the ink for an image in the ink set for an impermeable substrate of the embodiment of the present disclosure are as described above as the preferred embodiments of the peeling ink and the ink for an image in the image recording method of the embodiment of the present disclosure, respectively.

### Examples

Hereinafter, examples of the present disclosure will be described below, but the present disclosure is not limited to the following Examples.
"Parts" mean parts by mass.

Speedcure 7010L (manufactured by Lambson Ltd.) was used for the preparation of an ink containing Speedcure 7010 and EOTMPTA. Speedcure 7010L is a mixture of Speedcure 7010 and EOTMPTA, which are at a mixing ratio of 1:1 on a mass basis.

### <Preparation of Pigment Dispersion>

Each of components shown in the composition of a cyan dispersion D1C shown below was put in a disperser motor mill M50 (manufactured by Eiger Torrance Limited) and dispersed at a circumferential speed of 9 m/s for 4 hours, using zirconia beads having a diameter of 0.65 mm, to obtain a cyan pigment dispersion D1C.

A magenta dispersion D1M, a yellow dispersion D1Y, a black dispersion D1K, and a white dispersion D1W were also prepared in the same manner.
(Composition of Cyan Dispersion D1C)
   · IRGALITE BLUE GLVO (cyan pigment, manufactured by BASF Japan Ltd.)···30 parts
   · SR9003 (polyfunctional polymerizable monomer, propoxylated (2) neopentyl glycol diacrylate, manufactured by Sartomer Company, Inc.)···62 parts
   · SOLSPERSE 32000 (dispersant, manufactured by Noveon Inc.) ... 8 parts
(Composition of Magenta Dispersion D1M)
   - CINQUASIA MAGENTA RT-355-D (magenta pigment, manufactured by BASF Japan Ltd.) ... 30 parts
   - SR9003 (polyfunctional polymerizable monomer, propoxylated (2) neopentyl glycol diacrylate, manufactured by Sartomer Company, Inc.)···60 parts
   - SOLSPERSE 32000 (dispersant, manufactured by Noveon Inc.) ... 10 parts
(Composition of Yellow Dispersion D1Y)
   - NOVOPERM YELLOW H2G (yellow pigment, manufactured by Clariant) ... 30 parts
   - SR9003 (polyfunctional polymerizable monomer, propoxylated (2) neopentyl glycol diacrylate, manufactured by Sartomer Company, Inc.)···60 parts
   - SOLSPERSE 32000 (dispersant, manufactured by Noveon Inc.) ... 10 parts
(Composition of Black Dispersion D1K)
   - SPECIAL BLACK 250 (black pigment, Orion Engineered Carbons Llc.) ... 40 parts
   - SR9003 (polyfunctional polymerizable monomer, propoxylated (2) neopentyl glycol diacrylate, manufactured by Sartomer Company, Inc.)···50 parts
   - SOLSPERSE 32000 (dispersant, manufactured by Noveon Inc.) ... 10 parts
(Composition of White Dispersion D1W)
   - KRONOS 2300 (white pigment, manufactured by KRONOS Worldwide Inc.) ... 50 parts
   - SR9003 (polyfunctional polymerizable monomer, propoxylated (2) neopentyl glycol diacrylate, manufactured by Sartomer Company, Inc.)···46.5 parts
   - SOLSPERSE 41000 (dispersant, manufactured by Noveon Inc.) ... 3.5 parts

### <Preparation of Ink Jet Inks for Electron Beam Curing (Inks C1, M1, Y1, K1, and W 1)>

The components in the following composition were mixed together and stirred to prepare each of an ink C1, an ink M1, an ink Y1, an ink K1, and an ink W1 as the inkjet ink for electron beam curing.
(Composition of Ink C1)
   · Cyan dispersion D1C ... 9.5 parts
   · EOTMPTA: Ethoxylated (3) trimethylolpropane triacrylate (Sartomer Company, Inc.). Polyfunctional polymerizable monomer.... 1.8 parts
   · SR9003: Propoxylated (2) neopentyl glycol diacrylate (manufactured by Sartomer Company, Inc.). Polyfunctional polymerizable monomer.... 5.89 parts
   · SR341: 3-Methyl-1,5-pentanediol diacrylate (manufactured by Sartomer Company, Inc.). Polyfunctional polymerizable monomer.... 55.1 parts
   · A-200: Polyethylene glycol (200) diacrylate (manufactured by Sartomer Company, Inc.). Polyfunctional polymerizable monomer.... 27.2 parts
   · SC 7010: "Speedcure 7010" manufactured by Lambson Limited. 1,3-Di({α-[1-chloro-9-oxo-9H-thioxanthen-4-yl)oxy]acetylpoly[oxy(l-methylethylene)]}oxy)-2,2-bis({α-[1-methylethylene)]}oxymethyl)propane. High-molecular-weight initiator X having a molecular weight of 1,899.... 1.2 parts
   · Genomer 5271: Manufactured by Rahn AG. High-molecular-weight amine A having a molecular weight of 2,300.... 3 parts
   · UV-22 (Irgastab (registered trademark) UV-22, Poly[oxy(methyl-1,2-ethanediyl)],α, α', α"-1,2,3-propanetriyltris[ω-[(1-oxo-2-propen-1-yl)oxy]-, 2,6-bis(1,1-dimethylethyl)-4-(phenylenemethylene)cyclohexa-2,5-dien-1-one, manufactured by BASF SE) (polymerization inhibitor) ... 0.2 parts
   · BYK-378 (silicone-based surfactant (polyether-modified polydimethylsiloxane), manufactured by BYK Chemie GmbH) ... 2 parts
(Composition of Ink M1)
   - Magenta dispersion DIM ... 17 parts
   - SR341 ... 58.7 parts
   - A-200 ... 16.1 parts
   - SC7010 ... 3 parts
   - Genomer 5271 ... 3 parts
   - UV-22 ... 0.2 parts
   - BYK-378 ... 2 parts
(Composition of Ink Y1)
   - Yellow dispersion D1Y ... 10.5 parts
   - SR341 ... 43.3 parts
   - A-200 ... 38.2 parts
   - SC7010 ... 3 parts
   - Genomer 5271 ... 3 parts
   - UV-22 ... 0.2 parts
   - BYK-378 ... 1.8 parts
(Composition of Ink K1)
   - Black dispersion D1K ... 6.9 parts
   - SR341 ... 45.8 parts
   - A-200 ... 39.35 parts
   - SC7010 ... 3 parts
   - Genomer 5271 ... 3 parts
   - UV-22 ... 0.2 parts
   - BYK-378 ... 1.75 parts
(Composition of Ink W1)
   - White dispersion D1W ... 30 parts
   - SR341 ... 43.7 parts
   - A-200 ... 18.35 parts
   - SC7010 ... 3 parts
   - Genomer 5271 ... 3 parts
   - UV-22 ... 0.2 parts
   - BYK-378 ... 1.75 parts

### <Preparation of Ink for Forming Alkali-Peelable Layer (Ink CL1)>

The components in the following composition were mixed together and stirred to prepare an ink CL1 as an ink for forming an alkali-peelable layer (hereinafter also referred to as a "peeling ink").

### (Composition of Ink CL1)

- SR341 ... 55.1 parts
- A-200 ... 26.7 parts
- A-SA: 2-Acryloyloxyethyl succinic acid (product name "NK ESTER A-SA", manufactured by Shin-Nakamura Chemical Co., Ltd.) (Polymerizable monomer including an acid group) ... 10 parts· SC7010 ... 3 parts
- Genomer 5271 ... 3 parts
- UV-22 ... 0.2 parts
- BYK-378 ... 2 parts

### <Preparation of Image Recording>

As an image recording device, the following single-pass ink jet recording device was prepared.

As the single-pass ink jet recording device, six single-pass ink jet heads (specifically, Samba heads manufactured by FUJIFILM Dimatix, Inc., 1,200 npi, a minimum liquid droplet amount: 2 pL; hereinafter also simply referred to as "heads") were disposed on a table transport system along a transport path, and an LED light source (385 nm, 4 W) for pinning exposure was disposed between the heads as well as downstream of the most downstream head.

The ink CL1, the ink W1, the ink C1, the ink M1, the ink Y1, and the ink K1 were introduced into the respective heads such that the inks were arranged in this order from the upstream side.

An electron beam (EB) irradiator, Eye Compact EB (manufactured by Eye Electron Beam), for main curing was disposed further downstream of the LED light source for pinning exposure disposed downstream of the most downstream head.

### [Example 1]

### <Cyan Monochromatic Image Recording>

An impermeable substrate (specifically, TAIKO PET manufactured by Futamura Chemical Co., Ltd., thickness: 50 µm; hereinafter also simply referred to as a "substrate") that had been subjected to a corona treatment immediately before image recording was set on a transport table.

The substrate was transported at a transportation speed of 50 m/min, the ink CL1 (peeling ink) was applied onto the substrate during the transport from the head for the ink CL1 in the form of a solid image having a halftone dot rate of 100%, and the ink CL1 was subjected to ultraviolet (UV) irradiation by an LED light source disposed on the downstream side of the head for the ink CL 1 as pinning exposure. As the conditions for the pinning exposure, the conditions in which UV was irradiated at an illuminance of 0.40 W/cm² for 0.024 seconds (hereinafter all the pinning exposures were carried out under these conditions) were used.

The ink C1 (cyan ink) was applied onto the ink CL1 which had been subjected to pinning exposure, from the head for the ink C1 in the form of a solid image having a halftone dot rate of 100%, and was subjected to pinning exposure by an LED light source disposed on the downstream side of the head for the ink C 1.

Next, the ink CL1 and the ink C1 on the substrate were irradiated with electron beams (EB) using Eye Compact EB (manufactured by Eye Electron beams) under the conditions of an acceleration voltage of 90 KV and an irradiation dose of 60 KGy, thereby curing the inks (hereinafter also referred to as "main curing").

In this manner, a cyan monochromatic image recorded matter having a structure in which an alkali-peelable layer and a cyan image were arranged in this order on an impermeable substrate was obtained.

### <Evaluation of Cyan Monochromatic Image Recorded Matter>

The following evaluations were carried out on the cyan monochromatic image recorded matter.

The results are shown in Table 1.

### (Adhesiveness)

A cross hatch test compliant with ISO2409 (crosscut method) was performed on the image of the image recorded matter, and the adhesiveness of the cyan image on the impermeable substrate was evaluated based on the following evaluation standards.

In the cross hatch test, the cut interval was set to 1 mm and 25 square lattices having a size of 1 mm square were formed.

In the following evaluation standards, the rank of the most excellent adhesiveness is A.

In the following evaluation standards, a peeling rate (%) of the lattice is a value obtained by the following expression. The total number of lattices in the following expression is 25. Percentage (%) of lattice peeling = [(Number of lattices which were peeled off)/(Total number of lattices)]×100

### - Evaluation Standards for Adhesiveness -

A: The percentage (%) of lattice peeling was 0%.
B: The percentage (%) of lattice peeling was more than 0% and 10% or less.
C: The percentage (%) of lattice peeling was more than 10% and 50% or less.
D: The percentage (%) of lattice peeling was more than 50% and 90% or less.
E: The percentage (%) of lattice peeling was more than 90%.

### <Alkali Peelability>

The image recorded matter was immersed in a 1.5% by mass aqueous sodium hydroxide solution at 85°C and the peeled state was visually observed. The time immediately before a timing of immersing the image recorded matter until the cyan image was completely peeled off from the substrate was defined as a peeling time.

Alkali peelability was evaluated based on the peeling time. It can be said that as the peeling time is shorter, the alkali peelability is excellent. The evaluation standards are as follows.

In the following evaluation standards, the rank at which the alkali peelability was most excellent is A.

### - Evaluation Standards for Alkali Peelability -

A: The peeling time was 5 minutes or shorter.
B: The peeling time was longer than 5 minutes and 10 minutes or shorter.
C: the peeling time was longer than 10 minutes and 15 minutes or shorter.
D: The peeling time was longer than 15 minutes and 30 minutes or shorter.
E: The peeling time was longer than 30 minutes.

### (Migration Amount)

A sample having an area of 0.01 m² was cut out from a portion of the cyan image in the image recorded matter, and 10 mL of a mixed solution of water: ethanol = 70:30 (volume ratio) was added dropwise onto a surface of the cyan image of the cut sample.

The sample to which the mixed solution had been added dropwise was placed in a glass airtight container so that the added dropwise mixed solution did not volatilize, and left to stand at 40°C for 10 days.

After being left to stand for 10 days, a total elution amount (hereinafter referred to as a migration amount) of the eluted components from the solid image in the mixed solution that had been added dropwise was measured, and evaluation was performed according to the following evaluation standards.

The migration amount was measured by volatilizing the water-ethanol mixed solution after leaving the recorded matter for 10 days and measuring the mass of the residual component.

In the following evaluation standards, the rank in which the migration is most suppressed is A.

### - Evaluation Standards for Migration Amount -

A: The migration amount is 0 ppb.
B: The migration amount is more than 0 ppb and 10 ppb or less.
C: The migration amount is more than 10 ppb and 1 ppm or less.
D: The migration amount is more than 1 ppm and 10 ppm or less.
E: The migration amount is more than 10 ppm.

### [Examples 2 to 8]

The same operation as in Example 1 was performed, except that at least one of a part of the composition of the cyan ink or a part of the composition of the peeling ink was changed as shown in Table 1.

The results are shown in Table 1.

Numerical values in the column of each component in Table 1 mean parts by mass, and a blank means that the corresponding component is not contained.

Table 1 shows only a part of the composition of each of the cyan ink and the peeling ink. The types and the amounts of the components not shown in Table 1 are common to all Examples.

Details of each component in Table 1 are as follows.
- EEOTMPTA: Ethoxylated (3) trimethylolpropane triacrylate (Sartomer Company, Inc.). Polyfunctional polymerizable monomer.
- SR9003: Propoxylated (2) neopentyl glycol diacrylate (manufactured by Sartomer Company, Inc.). Polyfunctional polymerizable monomer.
- SR341: 3-Methyl-1,5-pentanediol diacrylate (manufactured by Sartomer Company, Inc.). Polyfunctional polymerizable monomer.
- A-200: Polyethylene glycol (200) diacrylate (manufactured by Sartomer Company, Inc.). Polyfunctional polymerizable monomer.
- 4-HBA: 4-Hydroxybutyl acrylate (manufactured by Osaka Organic Chemical Industry Ltd.). Monofunctional polymerizable monomer.
- SC 7010: "Speedcure 7010" manufactured by Lambson Limited. 1,3-Di({α-[1-chloro-9-oxo-9H-thioxanthen-4-yl)oxy]acetylpoly[oxy(l-methylethylene)]}oxy)-2,2-bis({α-[1-methylethylene)]}oxymethyl)propane. High-molecular-weight initiator X having a molecular weight of 1,899.
- 819: Omnirad 819 manufactured by IGM Resins B. V. Bis(2,4,6-trimethylbenzoyl)phenylphosphine oxide. Low-molecular-weight initiator having a molecular weight of less than 500.
- ITX: 2-Isopropylthioxanthone. Low-molecular-weight initiator having a molecular weight of less than 500.
- Genomer 5271: Manufactured by Rahn AG. High-molecular-weight amine having a molecular weight of 2,300.
- A-SA: 2-Acryloyloxyethyl succinic acid (product name "NK ESTER A-SA", manufactured by Shin-Nakamura Chemical Co., Ltd.). Polymerizable monomer including an acid group.
- GENOMER 7151: Carboxy-modified polyester acrylate (manufactured by RAHN AG). High-molecular-weight compound including an acid group.
- ARUFON (registered trademark) UF-5000: Manufactured by Toagosei Co., Ltd. High-molecular-weight compound including an acid group.

### [Comparative Example 1]

The same operation as in Example 1 was performed, except that a part of the composition of the peeling ink was changed as shown in Table 1.

The ink of Comparative Example 1 is an ink that does not contain a compound including an acid group and with which an alkali-peelable layer cannot be formed.

The results are shown in Table 1.

### [Comparative Example 2]

The same operation as in Example 1 was performed, except that as the main curing, irradiation with ultraviolet rays using an ultraviolet irradiation device (product name "CSOT-40", one 4 KW metal halide lamp, manufactured by GS Nippon Battery Co., Ltd.) was performed instead of irradiation with electron beams (EB), and a part of the composition of the peeling ink was changed as shown in Table 1.

The results are shown in Table 1.

### [Comparative Example 3]

The same operation as in Example 1 was performed, except that a part of the composition of the cyan ink was changed as shown in Table 1.

The results are shown in Table 1.

### [Comparative Example 4]

The same operation as in Example 1 was performed, except that the application of the ink CL1 (peeling ink; that is, the ink for forming an alkali-peelable layer) and the pinning exposure were not performed (that is, no alkali-peelable layer was formed).

The results are shown in Table 1.

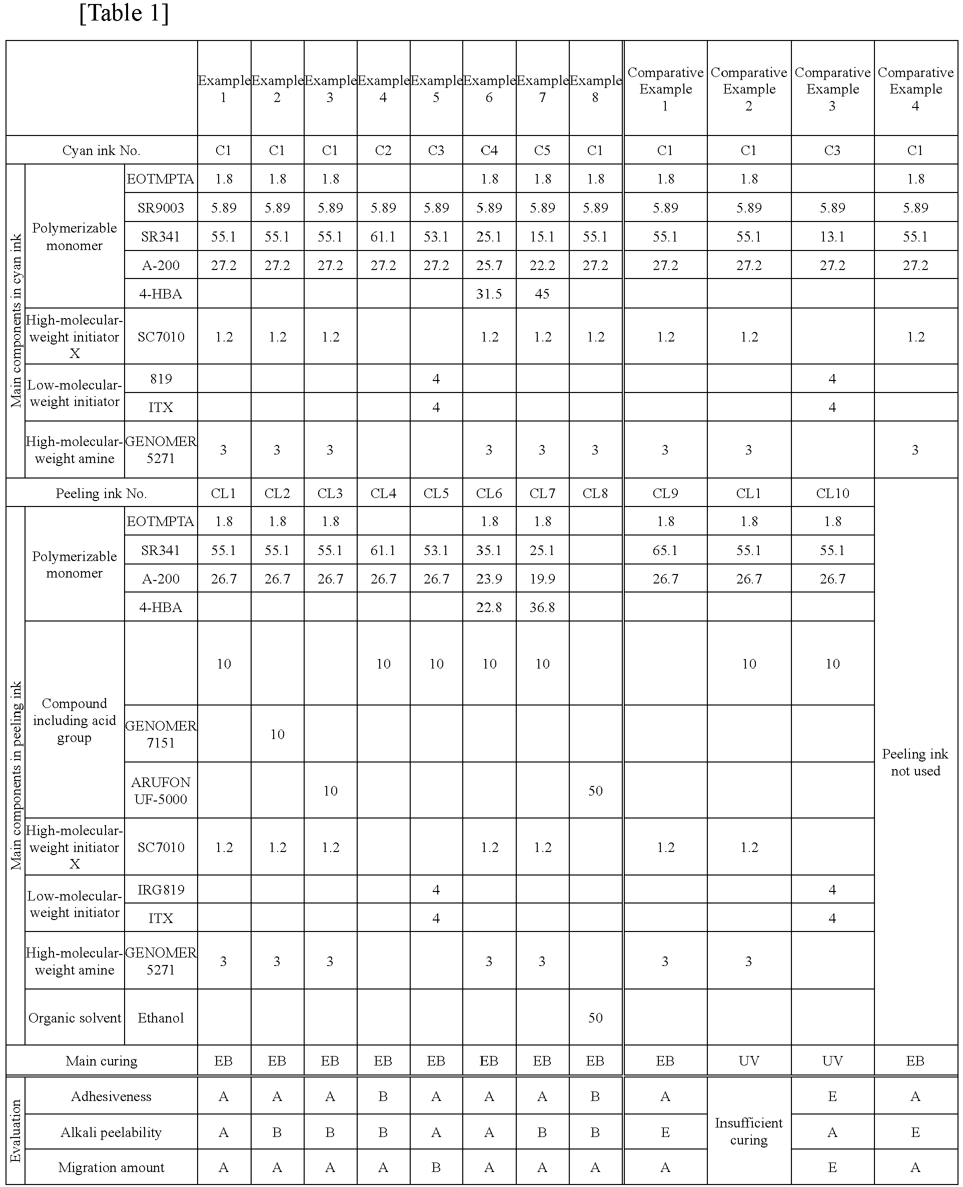

As shown in Table 1,
in Examples 1 to 8, in which the image recording method was carried out, the method including:
a step of applying a peeling ink on an impermeable substrate,
a step of applying an ink for an image (in this Example, a cyan ink), which is an ink jet ink for electron beam curing, containing a pigment and polymerizable monomers, onto the peeling ink applied onto the impermeable substrate, and
a step of irradiating the peeling ink and the ink for an image applied onto the impermeable substrate with electron beams,
the obtained image recorded matter had excellent adhesiveness between the image and the impermeable substrate and excellent alkali peelability of the image.

On the contrary, in Comparative Example 1 in which the peeling ink was changed to an ink which contains no compound including an acid group and with which an alkali-peelable layer cannot be formed, the alkali peelability of the image decreased.

In addition, in Comparative Example 2 in which the main curing was performed with UV instead of EB, the curing was insufficient and various evaluations could not be performed.

Moreover, in Comparative Example 3 in which SC7100, which was a high-molecular-weight initiator X, was changed to low-molecular-weight initiators (819 and ITX) having a molecular weight of less than 500, the curing was sufficient, various evaluations could be performed, but the adhesiveness of the image decreased, as compared with Comparative Example 2. A reason thereof is considered to be that the main curing was performed with UV instead of EB.

In addition, in Comparative Example 4 in which no peeling ink was used and no alkali-peelable layer was formed, the alkali peelability of the image decreased.

From the results of Examples 1 and 8, it can be seen that in a case where the peeling ink contains polymerizable monomers including an acid group (Example 1), the adhesiveness of the image and the alkali peelability of the image are further improved, as compared with a case where the peeling ink does not contain polymerizable monomers including an acid group (Example 8).

From the results of Examples 1 to 3, it can be seen that in a case where the peeling ink contains polymerizable monomers including an acid group (Example 1), the alkali peelability of the image is further improved, as compared with a case where the peeling ink contains a high-molecular-weight compound including an acid group instead of the polymerizable monomer including an acid group (Examples 2 and 3).

From the results of Examples 1, 4, and 5, it can be seen that in a case where at least one of the peeling ink or the ink for an image satisfies at least one of a condition that the ink contains a high-molecular-weight initiator X which is a hydrogen abstraction-type polymerization initiator having a molecular weight of 500 or more, or a condition that a total content of the polymerization initiators other than the high-molecular-weight initiator X is less than 1% by mass (Example 1), the adhesiveness of the image and the alkali peelability of the image are further improved, and the migration is further suppressed.

### [Example 101]

### <Image Recording of Multilayer Image>

Image recording of a multilayer image was carried out in the same manner as in "Cyan Monochromatic Image Recording" in Example 1, except that the operation of applying the ink C1 and subjecting the ink C1 to pinning exposure in "Cyan Monochromatic Image Recording" was changed to an operation in which
application of the ink W1 (halftone dot rate: 100%) and pinning exposure for the ink W1,
application of ink C1 (halftone dot rate of 50%) and pinning exposure for the ink C1,
application of the ink M1 (halftone dot rate of 50%) and pinning exposure for the ink M1,
application of the ink Y1 (halftone dot rate of 50%) and pinning exposure for the ink Y1, and
application of the ink K1 (halftone dot rate of 50%) and pinning exposure for the ink K1
were carried out in this order.

That is, even in this image recording of a multilayer image, formation of the alkali-peelable layer and the final irradiation with EB (that is, the main curing) were carried out in the same manner as in the cyan monochromatic image recording.

In this manner, the image recorded matter of the multilayer image, having a structure in which the alkali-peelable layer and the multilayer image were arranged in this order on the impermeable substrate was obtained.

Here, the multilayer image includes a white image having a halftone dot rate of 100% and a composite black image disposed on the white image. The composite black image is an image having a structure in which a cyan image having a halftone dot rate of 50%, a magenta image having a halftone dot rate of 50%, a yellow image having a halftone dot rate of 50%, and a black image having a halftone dot rate of 50% are laminated.

### <Evaluation of Image Recorded Matter of Multilayer Image>

For the image recorded matter of a multilayer image, evaluation in the same manner as in the evaluation carried out on the cyan monochromatic image recorded matter (that is, the adhesiveness, the alkali peelability, and the migration amount) was carried out.

The results are shown in Table 2.

### (Image Density)

The density of a multilayer image (that is, a composite black image) in an image recorded matter of a multilayer image was measured using FD-7 manufactured by Konica Minolta, Inc.

The image density of the multilayer image was evaluated according to the following evaluation standards, based on the measured results.

### - Evaluation Standards for Image Density -

A: The image density was 1.8 or more.
B: The image density was 1.5 or more and less than 1.8.
C: The image density was 1.5 or less.

### [Examples 102 to 105]

The same operation as in Example 101 was performed, except that the presence or absence of the pinning exposure immediately after the application of each ink was changed as shown in Table 2.

A blank in Table 2 means that the corresponding pinning exposure was not performed.

In addition, the expression, immediately after the application of each ink, means a time between the application of the corresponding ink and the application of the next ink.

### [Comparative Example 101]

The same operation as in Example 1 was performed, except that as the main curing, irradiation with ultraviolet rays (UV) using a metal halide lamp was performed instead of irradiation with electron beams (EB).

The irradiation with UV was carried out under the same conditions as for the irradiation with UV in Comparative Example 2.

The results are shown in Table 2.

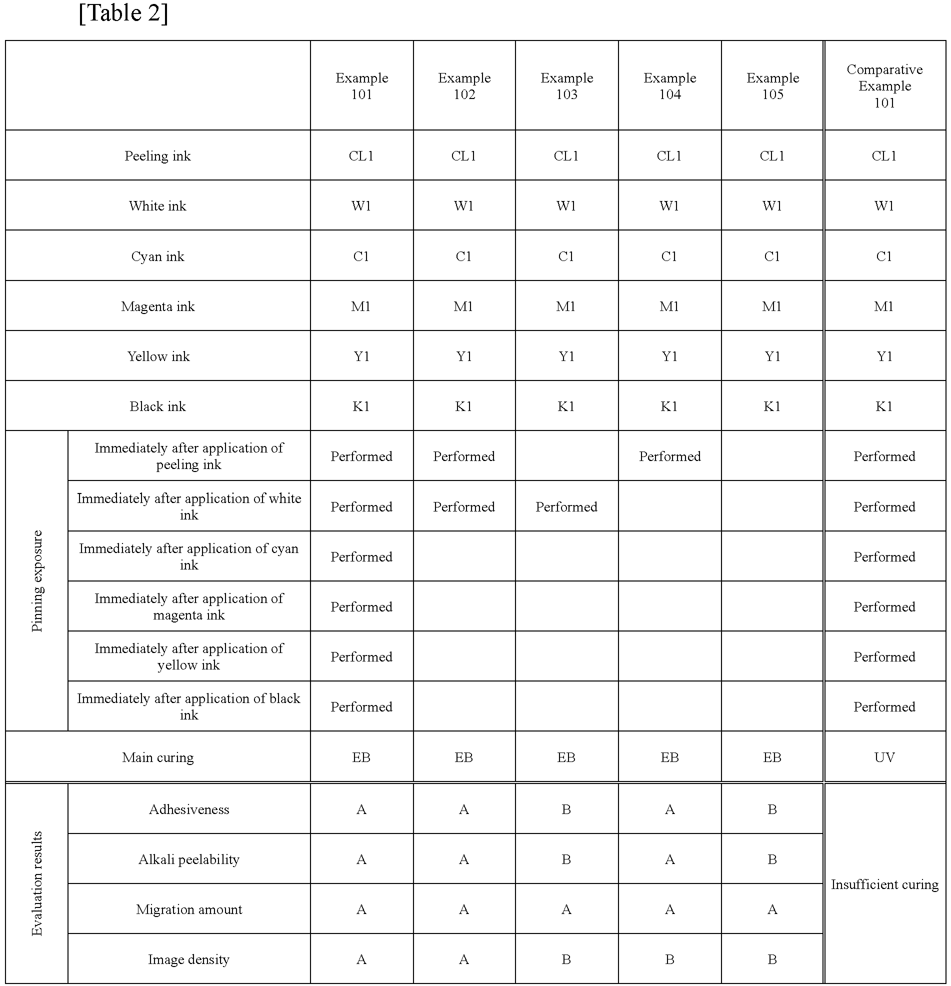

As shown in Table 2, even in Examples 101 to 105 in which inks of two or more colors were applied onto the ink for forming an alkali-peelable layer applied onto the impermeable substrate and cured by irradiation with EB to record a multilayer image, the same results as in Example 1 in which a cyan monochromatic image was recorded could be obtained.

On the contrary, in Comparative Example 101 in which the main curing was performed with UV instead of EB, the curing was insufficient and various evaluations could not be performed, as in Comparative Example 2 described above.

From the results of Examples 103 to 105, it can be seen that in a case where the peeling ink was subjected to pinning exposure (Example 104), the adhesiveness and the alkali peelability of the image are further improved.

From the results of Examples 102 and 104, it can be seen that in a case where the ink for an image (specifically, the white ink) was subjected to pinning exposure (Example 102), the density of the image is further improved.

The disclosure of JP2021-177666 filed on October 29, 2021 is incorporated in the present specification by reference in its entirety.

All documents, patent applications, and technical standards described in the present specification are herein incorporated by reference to the same extent that each individual document, patent application, or technical standard was specifically and individually indicated to be incorporated by reference.

## Claims

1. An image recording method comprising:
a step of applying an ink for forming an alkali-peelable layer onto an impermeable substrate;
a step of applying an ink jet ink for electron beam curing, containing a pigment and polymerizable monomers, onto the ink for forming an alkali-peelable layer applied onto the impermeable substrate; and
a step of irradiating the inkjet ink for electron beam curing applied onto the ink for forming an alkali-peelable layer on the impermeable substrate with electron beams.

2. The image recording method according to claim 1,
wherein the ink for forming an alkali-peelable layer contains a compound including an acid group.

3. The image recording method according to claim 2,
wherein the ink for forming an alkali-peelable layer is an inkjet ink for electron beam curing, containing polymerizable monomers.

4. The image recording method according to any one of claims 1 to 3,
wherein the ink for forming an alkali-peelable layer is an inkjet ink for electron beam curing, containing polymerizable monomers including an acid group.

5. The image recording method according to claim 3 or 4,
wherein in a case where the ink for forming an alkali-peelable layer is used as a peeling ink, and
the ink jet ink for electron beam curing, containing a pigment and polymerizable monomers, to be applied onto the ink for forming an alkali-peelable layer applied onto the impermeable substrate, is used as an ink for an image,
at least one of the peeling ink or the ink for an image satisfies at least one of
a condition that the ink contains a high-molecular-weight initiator X which is a hydrogen abstraction-type polymerization initiator having a molecular weight of 500 or more, or a condition that a total content of polymerization initiators other than the high-molecular-weight initiator X is less than 1% by mass.

6. The image recording method according to any one of claims 3 to 5,
wherein in a case where the ink for forming an alkali-peelable layer is used as a peeling ink, and
the ink jet ink for electron beam curing, containing a pigment and polymerizable monomers, to be applied onto the ink for forming an alkali-peelable layer applied onto the impermeable substrate, is used as an ink for an image,
a proportion of polyfunctional polymerizable monomers in an entire amount of the polymerizable monomers contained in at least one of the peeling ink or the ink for an image is 60% by mass or more.

7. The image recording method according to any one of claims 1 to 6,
wherein the ink for forming an alkali-peelable layer is an ink jet ink.

8. The image recording method according to any one of claims 1 to 7,
wherein the step of applying the ink for forming an alkali-peelable layer further includes irradiating the ink for forming an alkali-peelable layer applied onto the impermeable substrate with ultraviolet rays including radiation at a wavelength of 300 nm to 395 nm.

9. The image recording method according to any one of claims 1 to 8,
wherein the step of applying the inkjet ink for electron beam curing further includes irradiating the ink jet ink for electron beam curing applied onto the ink for forming an alkali-peelable layer on the impermeable substrate with ultraviolet rays including radiation at a wavelength of 300 nm to 395 nm.

10. The image recording method according to any one of claims 1 to 9,
wherein in a case where the ink jet ink for electron beam curing, containing a pigment and polymerizable monomers, to be applied onto the ink for forming an alkali-peelable layer applied onto the impermeable substrate, is used as an ink for an image,
two or more kinds of the inks for an image are used,
in the step of applying the ink jet ink for electron beam curing, two or more kinds of the inks for an image are applied onto the ink for forming an alkali-peelable layer applied onto the impermeable substrate, and
in the step of irradiating with electron beams, two or more kinds of the inks for an image applied onto the ink for forming an alkali-peelable layer on the impermeable substrate are irradiated with electron beams.

11. The image recording method according to claim 10,
wherein two or more kinds of the inks for an image include a white ink containing a white pigment and a colored ink containing a colored pigment,
in the step of applying the ink jet ink for electron beam curing, the white ink and the colored ink are applied in this order onto the ink for forming an alkali-peelable layer applied onto the impermeable substrate, and
in the step of irradiating with electron beams, the white ink and the colored ink applied onto the ink for forming an alkali-peelable layer on the impermeable substrate are irradiated with electron beams.

12. The image recording method according to any one of claims 1 to 11,
wherein the impermeable substrate is a beverage container made of a resin or a food packaging material made of a resin.

13. An ink set for an impermeable substrate, comprising:
an ink for forming an alkali-peelable layer; and
an ink jet ink for electron beam curing, containing a pigment and polymerizable monomers.

14. The ink set for an impermeable substrate according to claim 13,
wherein the ink for forming an alkali-peelable layer contains a compound including an acid group.
